# EUROPEAN PATENT SPECIFICATION

(11) **EP 3 216 601 B1**
(45) Date of publication and mention of the grant of the patent: **26.06.2019**
(21) Application number: 15857790.8
(22) Date of filing: 18.11.2015
(51) Int. Cl.: B32B 27/36, B32B 27/00, B32B 27/30, C08G 63/183, C08G 63/199

(54) **POLYESTER RESIN LAMINATE AND DECORATIVE FILM**
POLYESTERHARZLAMINAT UND ZIERFOLIE
STRATIFIÉ DE RÉSINE DE POLYESTER ET FILM DÉCORATIF

(30) Priority: 07.11.2014 JP 2014226973
(43) Date of publication of application: 13.09.2017
(73) Proprietor: Riken Technos Corporation, Tokyo 101-8336 (JP)
(72) Inventor: TOKUNAGA Yasushi, Tokyo 101-8336 (JP); NOZAWA Takafumi, Tokyo 101-8336 (JP)
(74) Representative: Müller-Boré & Partner Patentanwälte PartG mbB
(86) International application number: PCT/JP2015/082451
(87) International publication number: WO 2016/072528

(56) References cited:
- JP-A- 2001 353 831
- JP-A- 2007 039 581
- JP-A- 2008 093 827
- JP-A- 2010 106 086
- JP-A- 2013 075 966
- JP-B2- 3 678 063
- US-A1- 2004 202 828

## Description

### [Technical Field]

The present invention relates to a polyester-based resin laminate and a decorative film using the same.

### [Background Art]

Conventionally, furniture such as display cabinets, storage cabinets, cupboards, and desks; home electric appliances such as refrigerators, washing machines, air-conditioners, mobile phones, and personal computers; surfaces of base materials composed of woody materials including wood, plywood, laminated wood, particle boards, and hard boards, to be used as building components for floors, walls, bath rooms, and the like; and surfaces of base materials composed of metallic materials including iron and aluminum; are decorated by lamination with decorative films to provide articles for use. Decorative films are required to have not only decorative properties, but also impact resistance, bending resistance, moldability, and the like at high levels in a well-balanced manner. Since polyester-based resin films, especially amorphous polyester-based resin films, have high transparency and glossiness as well as excellent impact resistance, bending resistance, and moldability, they are often used for such decorative films in recent years. However, polyester-based resin films have a problem that adhesiveness to printed layers are insufficient for application to three-dimensional forming such as membrane press forming, vacuum forming, and vacuum pressure forming.

In view of this, "a decorative sheet for three-dimensional processing, comprising: a base material layer composed of a colored resin material containing, as a major component, an amorphous polyethylene terephthalate-based resin composed of a resin prepared by copolymerizing a dicarboxylic acid component composed of terephthalic acid with a diol component composed of 25 to 35 mol% of 1,4-cyclohexanedimethanol and 65 to 75 mol% of ethylene glycol; a printed pattern layer formed on one side of the base material layer, which printed pattern layer is composed of a colored ink composed of a binder containing, as a major component, a vinyl chloride-vinyl acetate copolymer; and a transparent layer formed by being laminated on the printed pattern layer, which transparent layer is composed of a resin material containing, as a major component, a transparent amorphous polyethylene terephthalate-based resin composed of a resin prepared by copolymerizing a dicarboxylic acid component composed of terephthalic acid with a diol component composed of 25 to 35 mol% of 1,4-cyclohexanedimethanol and 65 to 75 mol% of ethylene glycol; wherein high laminate strength can be obtained between the base material layer and the transparent layer" has been proposed (Patent Document 1). However, according to a study by the present inventors, the adhesiveness between the polyester-based resin film and the printed layer in the technique of Patent Document 1 was insufficient for decoration of articles having complicated shapes.

Patent Document 2 discloses a decorative sheet comprising a base material formed of a colored resin material including an amorphous polyethylene terephthalate type resin as a main component and a print pattern layer formed on one surface of said base material layer, consisting of a coloring ink comprising a binder including a copolymer of vinyl chloride and vinyl acetate as a main component. The amorphous polyethylene terephthalate resin is obtained by copolymerization of a dicarboxylic acid component consisting of terephthalic acid and a diol component consisting of 25 to 35% by mole of 1,4-cyclohexanedimethanol and 65 to 75% by mole of ethylene glycol.

Patent Document 3 discloses a decorative sheet, which comprises a base material layer containing a polyester resin (a) and a printing pattern layer which is formed of color ink comprising a binder based on a vinyl chloride/vinyl acetate copolymer. The polyester resin (a) is constituted of a dicarboxylic acid component (i) comprising terephthalic acid and a diol component (ii) composed of 60.5-71.5 mol% of ethylene glycol, 2.5-6 mol % of diethylene glycol and 26-37 mol% of 1,4-cyclohexane dimethanol (1,4-cyclohexane dimethanol is constituted of 65-75 mol% of trans and 25-35 mol % of cis). Preferably the number average molecular weights of the polyester-type resin (a) measured by GPC are 16,000-24,000 g/mol.

Patent Document 4 discloses a laminate which has a base material layer which consists of coloring resin material which has amorphous|non-crystalline polyethylene-terephthalate resin as a main component, and a print pattern layer, formed in one surface of this base material layer and consists of coloring ink and vinyl chloride-vinylacetate copolymer as a main component. The amorphous|non-crystalline polyethylene-terephthalate resin is obtained by copolymerising dicarboxylic acid component consisting of a terephthalic acid, and the diol component which consists of 25-35 mol% 1, 4- cyclohexane dimethanol and 65-75 mol% ethylene glycol.

Patent Document 5 discloses a decorative sheet having a resin layer comprising a polyester and a printed layer comprising a colour ink and vinyl-chloride-vinylacetate copolymer. The resin layer contains a polyester composition and allowing excellent adhesion of ink.

### [Prior Art Document]

### [Patent Document]

[Patent Document 1] Japanese Patent No. 3678063 B
[Patent Document 2] Japanese Patent Application JP 2007-039581 A
[Patent Document 3] Japanese Patent Application JP 2008-093827 A
[Patent Document 4] Japanese Patent Application JP 2001-353831 A
[Patent Document 5] American Patent Application US 2004/202828 A1

### SUMMARY OF THE INVENTION

### [Problems to be Solved by the Invention]

An object of the present invention is to provide a polyester-based resin laminate having excellent adhesiveness to a printed layer, and a decorative film using it which is applicable to membrane press forming, vacuum forming, vacuum pressure forming, and the like for decoration of articles having complicated shapes.

### [Means for Solving the Problems]

The present inventor has made intensive studies, and as a result, has found that the above object can be achieved by using a particular polyester-based resin.

That is, the present invention provides a laminate comprising (A) a resin film and (B) a printed layer formed on at least one side of the resin film, wherein
(A) the resin film comprises (a) a polyester-based copolymer having the properties (1) to (5):
   (1) 98 to 100 mol% of constituent units derived from terephthalic acid component are contained based on 100 mol % of the total of constituent units derived from dicarboxylic acid components;
   (2) 60.5 to 72.5 mol% of constituent units derived from ethylene glycol, 1.5 to 6 mol% of constituent units derived from diethylene glycol and 26 to 38 mol% of constituent units derived from 1,4-cyclohexanedimethanol are contained based on 100 mol% of the total of constituent units derived from diol components;
   (3) the constituent units derived from 1,4-cyclohexanedimethanol are composed of 65 to 75 mol% of *trans* isomers and 35 to 25 mol% of *cis* isomers, wherein the total of the *trans* isomers and the *cis* isomers is 100 mol%;
   (4) the ratio (Mw/Mn) between the mass average molecular weight (Mw) and the number average molecular weight (Mn) in terms of polystyrene as calculated from a differential molecular weight distribution curve measured by gel permeation chromatography is 2.9 to 3.8; and
   (5) the number average molecular weight (Mn) is 16,000 to 24,000; and
(B) the printed layer is composed of a colored ink comprising a vinyl chloride-vinyl acetate copolymer.

A second aspect of the present invention provides the laminate according to the first aspect of the present invention, wherein (a) the polyester-based copolymer contains 60.5 to 71.5 mol% of constituent units derived from ethylene glycol, 2 to 5 mol% of constituent units derived from diethylene glycol and 26 to 37 mol% of constituent units derived from 1,4-cyclohexanedimethanol based on 100 mol% of the total of constituent units derived from diol components.

A third aspect of the present invention provides the laminate according to the first aspect or the second aspect of the present invention, wherein the colored ink contains a vehicle comprising:
(P) 60 to 95% by mass of vinyl chloride-vinyl acetate copolymer; and
(Q) 40 to 5% by mass of poly(methyl methacrylate)-based resin;
   wherein the total of the component (P) and the component (Q) is 100% by mass.

A forth aspect of the present invention provides the laminate according to any one of the first to third aspects of the present invention, wherein (A) the resin film comprises (a) the polyester-based copolymer and a core-shell rubber.

A fifth aspect of the present invention provides the laminate according to any one of the first to forth aspects of the present invention, comprising:
(A1) a transparent resin film layer comprising (a) the polyester-based copolymer;
(B) a printed layer composed of a colored ink comprising a vinyl chloride-vinyl acetate copolymer; and
(A2) a colored resin film layer comprising (a) the polyester-based copolymer;
   in this order.

A sixth aspect of the present invention provides a decorative film comprising the laminate according to any one of the first to fifth aspects of the present invention.

A seventh aspect of the present invention provides an article comprising the decoravtive film according to the sixth aspect of the present invention.

A eighth aspect of the present invention provides the use of the laminate according to any one of the first to fifth aspect of the present invention.

### [Effect of the Invention]

The polyester-based resin laminate of the present invention has excellent adhesiveness to a printed layer. Thus, a decorative film using the polyester-based resin laminate of the present invention is applicable to three-dimensional forming such as membrane press forming, vacuum forming, and vacuum pressure forming for decoration of articles having complicated shapes.

### BRIEF DESCRIPTION OF THE DRAWINGS

Fig. 1 is a base body used for evaluation of the vacuum formability.
Fig. 2 is a diagram illustrating vacuum forming.
Fig. 3 is an example of measurement of the ¹H-NMR spectrum.

### DETAILED DESCRIPRION OF THE INVENTION

In the present description, the term "resin" is used as a term which includes "resin mixture containing two or more resins" and "resin composition containing a component other than resins". The term "film" is used as a term which also includes "sheet".

In the laminate of the present invention, (B) a printed layer composed of a colored ink containing a vinyl chloride-vinyl acetate copolymer is formed on at least one side of (A) a resin film comprising (a) a polyester-based copolymer having the following properties (1) to (5).

### (A) Resin Film:

The (A) resin film is a film composed of (a) a polyester-based copolymer, or a film composed of a resin mixture or resin composition containing (a) a polyester-based copolymer and an arbitrary component which is used as desired.

### (a) Polyester-based Copolymer

The component (a) contains, (1) when the total of constituent units derived from a dicarboxylic acid component(s) is defined as 100 mol%, constituent units derived from terephthalic acid at 98 to 100 mol%, preferably 99 to 100 mol%, more preferably 100 mol%. In cases where the component (a) contains constituent units derived from terephthalic acid in the amount described above as constituent units derived from a dicarboxylic acid component, a polyester-based resin laminate having excellent adhesiveness to a printed layer can be produced.

Examples of dicarboxylic acid components other than terephthalic acid which may be used for the component (a) include aromatic polyvalent carboxylic acids such as isophthalic acid, orthophthalic acid, and naphthalene dicarboxylic acid, and derivatives thereof; and aliphatic polyvalent carboxylic acids such as oxalic acid, malonic acid, succinic acid, glutaric acid, adipic acid, pimelic acid, suberic acid, azelaic acid, sebacic acid, 1,2-cyclohexanedicarboxylic acid, 1,3-cyclohexanedicarboxylic acid, 1,4-cyclohexanedicarboxylic acid, and 1,4-cyclohexanedicarboxylate, and derivatives thereof. As the dicarboxylic acid component other than terephthalic acid, one or more of these may be used.

The component (a) contains, (2) when the total of constituent units derived from diol components is defined as 100 mol%, constituent units derived from ethylene glycol at 60.5 to 72.5 mol%, constituent units derived from diethylene glycol at 1.5 to 6 mol%; and constituent units derived from 1,4-cyclohexanedimethanol at 26 to 38 mol%. The component (a) preferably contains, when the total of constituent units derived from diol components is defined as 100 mol%, constituent units derived from ethylene glycol at 60.5 to 71.5 mol%, constituent units derived from diethylene glycol at 2 to 5 mol%; and constituent units derived from 1,4-cyclohexanedimethanol at 26 to 37 mol%. Here, the total of the constituent units derived from ethylene glycol, the constituent units derived from diethylene glycol, and the constituent units derived from 1,4-cyclohexanedimethanol is usually 98 to 100 mol%, preferably 99 to 100 mol%, more preferably 100 mol%. In cases where the component (a) contains these in the amounts described above as constituent units derived from diol components, a polyester-based resin laminate having excellent adhesiveness to a printed layer can be produced.

Examples of diol components other than ethylene glycol, diethylene glycol, and 1,4-cyclohexanedimethanol which may be used for the component (a) include polyol components such as neopentyl glycol, 1,2-butanediol, 1,3-butanediol, 1,4-butanediol, 1,5-pentanediol, 3-methyl-1,5-pentanediol, 2-methyl-1,3-propanediol, and 2,2,4,4-tetramethyl-1,3-cyclobutanediol. As the diol component other than ethylene glycol, diethylene glycol, and 1,4-cyclohexanedimethanol, one of more of these may be used.

In the component (a), (3) the constituent units derived from 1,4-cyclohexanedimethanol are constituted by 65 to 75 mol% *trans* isomers and 35 to 25 mol% *cis* isomers. Here, the total of the *trans* isomers and the *cis* isomers is 100 mol%. In cases where the ratio between the *trans* isomers and the *cis* isomers is within the range described above, a polyester-based resin laminate having excellent adhesiveness to a printed layer can be produced.

The 1,4-cyclohexanedimethanol can be obtained by a known method, for example, a method in which 1,4-cyclohexanedicarboxylic acid dimethyl ester is hydrogenated in the presence of a copper-chromium catalyst, followed by distillation. The control of the ratio between the *trans* isomers and the *cis* isomers can be carried out by a known method, for example, the method described in JP 2537401 B.

The ratio of constituent units derived from each component in the component (a) and the ratio between the *trans* isomers and the *cis* isomers of the constituent units derived from 1,4-cyclohexanedimethanol can be calculated by using ¹³C-NMR or ¹H-NMR.

The ¹³C-NMR spectrum can be measured by, for example, dissolving 20 mg of a sample in 0.6 mL of a chloroform-d₁ solvent, and then using a 125 MHz nuclear magnetic resonance apparatus under the following conditions.
Chemical shift reference: chloroform-di, 77 ppm
Measurement mode: single-pulse proton broadband decoupling
Pulse width: 45° (5.00 µsec.)
Point number: 64K
Measurement range: 250 ppm (-25 to 225 ppm)
Repetition time: 5.5 sec.
Integration time: 256 times
Measurement temperature: 23°C
Window function: exponential (BF: 1.0 Hz)

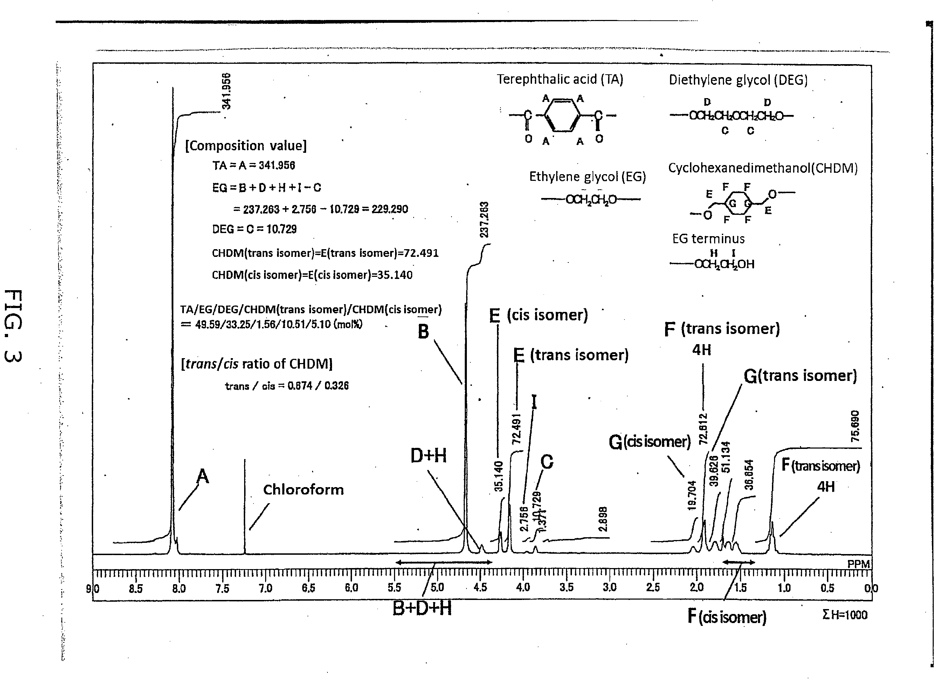

The ¹H-NMR spectrum can be measured by, for example, dissolving 20 mg of a sample in 0.6 mL of a chloroform-di solvent, and then using a 400 MHz nuclear magnetic resonance apparatus under the following conditions. Fig. 3 shows a measurement example.
Chemical shift reference: chloroform, 7.24 ppm
Measurement mode: single pulse
Pulse width: 45° (5.14 µsec.)
Point number: 16K
Measurement range: 15 ppm (-2.5 to 12.5 ppm)
Repetition time: 7.8 sec.
Integration time: 64 times
Measurement temperature: 23°C
Window function: exponential (BF: 0.18 Hz)

Each peak can be identified by reference to "especially pp. 496-503 in Handbook of Polymer Analysis (1st edition, 1st impression; Sep 20, 2008; Conference on Analysis and Research of Polymers, The Japan Society for Analytical Chemistry ed.; Asakura Publishing Co., Ltd.)" and "NMR Database in National Institute for Materials Science Materials Information Station (http://polymer.nims.go.jp/NMR/)", and the ratio of each component in the component (a) can be calculated based on the peak area ratio. The measurement of ¹³C-NMR and ¹H-NMR can also be carried out in analysis agencies such as Mitsui Chemical Analysis & Consulting Service, Inc.

In the component (a), (4) the ratio (Mw/Mn) between the mass average molecular weight (Mw) and the number average molecular weight (Mn) in terms of polystyrene as calculated from a differential molecular weight distribution curve measured by gel permeation chromatography (GPC) is 2.9 to 3.8, preferably 3.3 to 3.6. In cases where Mw/Mn of the component (a) is within the range described above, a polyester-based resin laminate having excellent adhesiveness to a printed layer can be produced.

In the component (a), (5) the number average molecular weight (Mn) is 16,000 to 24,000. In cases where Mn of the component (a) is within the range described above, a polyester-based resin laminate having excellent adhesiveness to a printed layer can be produced.

The measurement by gel permeation chromatography (GPC) can be carried out by using, as the system, a high-performance liquid chromatography system "LC-2000 Plus (trade name)" (system containing a degasser, liquid transfer pump "PU-2080 (trade name)", automatic sampler "AS-2055 (trade name)", column oven, and RI (differential refractive index) detector); as the column, two columns packed with a styrene-divinyl benzene copolymer "Shodex GPC K-806L (trade name)", manufactured by Showa Denko K. K., connected to each other; and as the mobile phase, chloroform for high-performance liquid chromatography (containing ethanol as a stabilizer) manufactured by Wako Pure Chemical Industries, Ltd.; under conditions at a flow rate of 1.0 mL/minute and a column temperature of 40°C, with a sample concentration of 1 mg/mL and a sample injection volume of 100 µL. The elution volume at each retention volume is determined from the volume detected by the RI detector under the assumption that the refractive index of the polyester is independent of the molecular weight. The calibration curve from the retention volume to the molecular weight in terms of polystyrene is prepared using a standard polystyrene "EasiCal PS-1 (trade name)", manufactured by Agilent technologies (Plain-A molecular weights, 6,870,000, 841,700, 152,800, 28,770, and 2930; Plain-B molecular weights, 2,348,000, 327,300, 74,800, 10,110, and 580). As the analysis program, "ChromNAV GPC (trade name)", manufactured by JASCO Corporation, is used. For the theory of GPC and practical measurement, one may refer to reference books such as "Size Exclusion Chromatography High-performance Liquid Chromatography for Polymers; author, Sadao Mori; 1st edition, 1st impression; Dec. 10, 1991".

The component (a) can be obtained by performing copolymerization by a known method using, as a dicarboxylic acid component(s), a predetermined amount(s) of terephthalic acid and, if desired, another/other dicarboxylic acid(s), and using, as diol components, predetermined amounts of ethylene glycol, diethylene glycol, and 1,4-cyclohexanedimethanol, and, if desired, another/other diol component(s). The method for the copolymerization is not limited, and may be based either on the direct esterification reaction or the transesterification reaction. The method may be either a batch method or a continuous method.

It is known that, in cases where ethylene glycol is used as a diol component in production of a polyester, constituent units derived from diethylene glycol generated by condensation reaction of the ethylene glycol are produced in the production process. However, the amount of constituent units derived from diethylene glycol in the component (a) largely exceeds the amount of constituent units derived from diethylene glycol generated by condensation reaction of ethylene glycol in a normal production method. Thus, for obtaining the component (a), a predetermined amount of diethylene glycol is usually used as a diol component. It should be noted, however, that methods that enhance, in order to obtain the component (a), the condensation reaction of ethylene glycol to increase the amount of diethylene glycol produced as a by-product such that the amount constituent units derived from diethylene glycol falls within a predetermined range are not excluded.

The resin mixture or resin composition containing (a) the polyester-based copolymer and the an arbitrary component which is used as desired contains the component (a) in an amount of usually not less than 75% by mass, preferably not less than 85% by mass.

Examples of the arbitrary component include thermoplastic resins other than the component (a); pigments, inorganic fillers, organic fillers, and resin fillers; and additives such as lubricants, antioxidants, weathering agents, heat stabilizers, mold release agents, antistatic agents, and surfactants. The amount of the arbitrary component to be contained is usually about 0.1 to 30 parts by mass with respect to 100 parts by mass of the component (a).

Preferred examples of the arbitrary component include core-shell rubbers. Examples of the core-shell rubbers include methacrylate-styrene/butadiene rubber graft copolymers, acrylonitrile-styrene/butadiene rubber graft copolymers, acrylonitrile-styrene/ethylene-propylene rubber graft copolymers, acrylonitrile-styrene/acrylate graft copolymers, methacrylate/acrylate rubber graft copolymers, and methacrylate-acrylonitrile/acrylate rubber graft copolymers. As the core-shell rubber, one of these or a mixture of two or more of these may be used.

The polyester resin film used for the laminate of the present invention can be obtained with the component (a), or a resin mixture or resin composition containing the component (a) and an arbitrary component which is used as desired, using an arbitrary apparatus, for example, a calender roll machine or an apparatus having an extruder and a T-die. Examples of the calender roll machine include vertical-type triple rolls, vertical-type quadruple rolls, L-type quadruple rolls, inverted L-type quadruple rolls, and Z-type rolls. Examples of the extruder include single-screw extruders, co-rotating twin-screw extruders, and counter-rotating twin-screw extruders. Examples of the T-die include manifold dies, fishtail dies, and coat hanger dies.

The thickness of (A) the resin film is usually 30 to 1000 µm, preferably 50 to 600 µm, more preferably 80 to 300 µm.

### (B) Printed Layer:

The (B) printed layer is composed of a colored ink containing a vinyl chloride-vinyl acetate copolymer. The colored ink is prepared by mixing a pigment(s), solvent(s), stabilizer(s), plasticizer(s), catalyst(s), curing agent(s), and/or the like as appropriate in a vehicle. The vehicle contains the vinyl chloride-vinyl acetate copolymer in an amount of usually not less than 25% by mass, preferably not less than 50% by mass, more preferably not less than 60% by mass. Thus, the laminate of the present invention can be prepared as a polyester-based resin laminate having excellent adhesiveness to a printed layer.

Preferred examples of the vinyl chloride-vinyl acetate copolymer include those containing, when the total of constituent units is defined as 100% by mass, constituent units derived from vinyl acetate in an amount of 5 to 25% by mass, preferably 10 to 20% by mass.

Examples of vehicles other than the vinyl chloride-vinyl acetate copolymer that may be contained in the colored ink include acryl-based resins, urethane-based resins, polyester-based resins, and cellulose-based resins. As the other vehicle, one or more of these may be used. Among these, acryl-based resins are preferred; poly(alkyl methacrylate)-based resins are more preferred; poly(methyl methacrylate)-based resins (resins containing, when the total of constituent units is defined as 100% by mass, constituent units derived from methyl methacrylate at not less than 95% by mass, preferably not less than 97% by mass, more preferably not less than 99% by mass) are still more preferred.

Preferred examples of the vehicle include vehicles composed of 60 to 95% by mass, preferably 70 to 90% by mass vinyl chloride-vinyl acetate copolymer together with 40 to 5% by mass, preferably 30 to 10% by mass poly(alkyl methacrylate)-based resin.

The pigment used for the colored ink is not limited, and known pigments may be used as desired. Examples of the pigment include inorganic pigments such as titanium oxide (white), carbon black, colcothar, and ultramarine (ultramarine blue); organic pigments such as aniline black, quinacridone red, isoindolinone yellow, and phthalocyanine blue; and extender pigments such as calcium carbonate, barium sulfate, silicon oxide, and aluminum oxide. As the pigment, one of these or a mixture of two or more of these may be used.

The content of the pigment in the colored ink with respect to 100 parts by mass of the vehicle is usually not more than 100 parts by mass, preferably not more than 50 parts by mass depending on the compatibility between the vehicle and the pigment, from the viewpoint of adhesiveness of (A) the resin film to (B) the printed layer. There is no lower limit of the content, and the content may be arbitrarily selected depending on the desired design.

Examples of the solvent used for the colored ink include methanol, ethanol, 1-methoxy-2-propanol, n-butyl acetate, toluene, methyl ethyl ketone, methyl isobutyl ketone, ethyl acetate, acetone, and mixtures thereof. Among these, from the viewpoint of preventing deterioration of the surface gloss of (A) the resin film during formation of (B) the printed layer, the solvent is preferably a solvent containing not less than 40% by mass 1-methoxy-2-propanol, more preferably a solvent containing not less than 80% by mass 1-methoxy-2-propanol.

The pattern to be given by (B) the printed layer is not limited, and an arbitrary pattern may be given. Examples of the pattern include metallic patterns such as hairline patterns; wood grain patterns; stone grain patterns mimicking surfaces of rocks such as marble; fabric patterns mimicking texture patterns and cloth-like patterns; tile-like patterns, brick-like patterns, parquet-like patterns, and patchworks.

The method for forming (B) the printed layer on (A) the resin film is not limited, and a known printing method may be used. Specific examples of the method include letterpress printing, gravure printing, lithographic offset printing, and screen printing.

The thickness of (B) the printed layer is not limited, and may be usually 0.5 to 10 µm, preferably 1 to 5 µm.

The side on which (B) the printed layer is to be formed on (A) the resin film may be preliminarily subjected to easy-adhesion treatment such as corona discharge treatment and/or anchor coating. After performing corona discharge treatment, anchor coating may further be carried out.

The decorative film of the present invention preferably has, from surface-layer side, (A1) a layer of a transparent resin film containing (a) the polyester-based copolymer; (B) a printed layer composed of a colored ink containing a vinyl chloride-vinyl acetate copolymer; and (A2) a layer of a colored resin film containing (a) the polyester-based copolymer. By providing the resin film layers containing (a) the polyester-based copolymer on both sides of (B) the printed layer, the effect to suppress cracking or breaking of the print can be further enhanced. Further, by providing (A1) the layer of a transparent resin film on (B) the printed layer, a rich design can be given.

The method for applying the decorative film of the present invention to three-dimensional forming such as membrane press forming, vacuum forming, or vacuum pressure forming for decoration of an article having a complicated shape is described below taking the case of vacuum forming as an example.

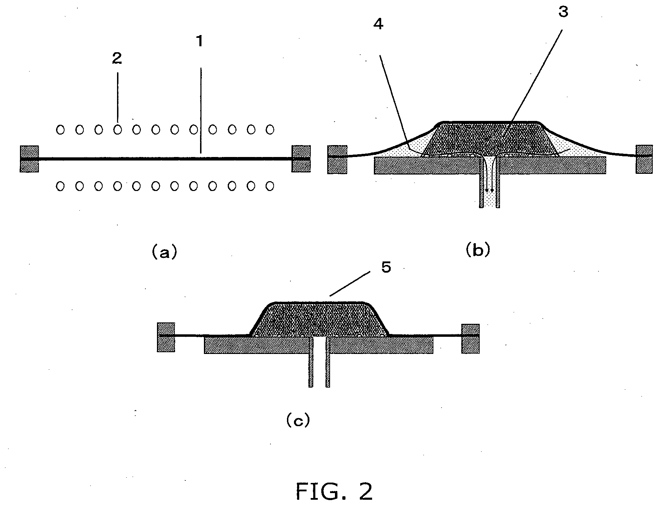

An example of vacuum forming is illustrated in Fig. 2. In cases where vacuum forming is carried out, a decorative film (1) is first softened by heating with an infrared heater (2) or the like as shown in Fig. 2(a). Subsequently, the softened decorative film (1) is released from the infrared heater (2), and then a base body (3) is immediately covered with the film (Fig. 2(b)). Thereafter, the pressure of the space (4) between the decorative film (1) and the base body (3) is reduced to closely adhere the decorative film (1) to the base body (3), thereby obtaining a molded article (5) coated (decorated) with the decorative film (Fig. 2(c)). The pressure in the space (4) is preferably not more than 10 KPa, more preferably not more than 1 KPa from the viewpoint of preventing air from remaining between the decorative film (1) and the base body (3) to achieve the close adhesion. The adhesive force is getting higher according to lower pressure in the space (4), the higher the adhesive force. However, in view of the fact that the cost increase is accelerated as the pressure decreases, and taking the mechanical strength of the base body and the film into account, the lower limit of the pressure in the space (4) is practically about 10⁻⁵ KPa.

### EXAMPLES

Hereinafter, the present invention is described with reference to Examples, but the present invention is not limited thereto.

### Measurement Method

### (I) Grid Test

According to JIS K 5600-5-6:1999, cuts were formed on the printed-layer side of the laminate to form a grid having 100 squares (wherein each square has a size of 1 mm × 1 mm), and an adhesion test tape was attached to the grid, followed by rubbing the tape with a finger and then removing the tape. The evaluation was carried out based on the standard according to Table 1 of the JIS standard described above.
Class 0: The rims of the cuts are completely smooth, and no peeling of any grid square is found.
Class 1: Minor peeling of the coating is found at an intersection(s) of cuts. The proportion of affected cross-cut portion(s) is clearly not more than 5%.
Class 2: Peeling of the coating is found along rims of cuts and/or at intersections. The proportion of affected cross-cut portions is clearly more than 5% and not more than 15%.
Class 3: Partial or entire, extensive peeling of the coating is found along rims of cuts, and/or partial or entire peeling of various portions is found on the grid. The proportion of affected cross-cut portions is clearly more than 15% and not more than 35%.
Class 4: Partial or entire, extensive peeling of the coating is found along rims of cuts, and/or partial or entire peeling of several portions is found on the grid. The proportion of affected cross-cut portions is clearly more than 35% and not more than 65%.
Class 5: The extent of peeling exceeds Class 4.

### (II) Vacuum Formability:

### (1) Production of Resin Base Body:

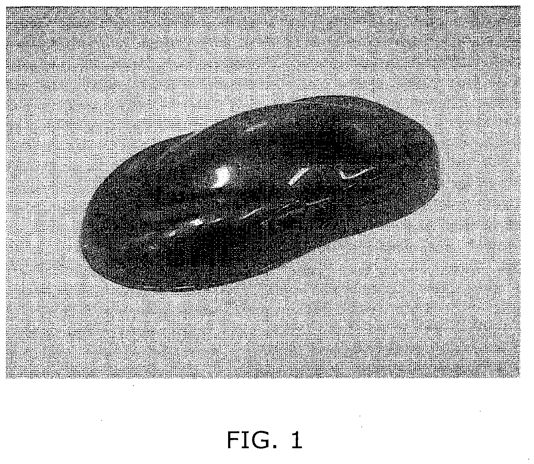

With an ABS/PC alloy resin manufactured by Techno Polymer Co., Ltd. "Excelloy CK50 (trade name)", a base body made of a thermoplastic resin was prepared by injection molding using a 100-ton injection molding machine under the following conditions: cylinder temperature, 260°C; mold temperature, 70°C; injection speed, 250 mm/sec.; holding pressure, 50 MPa. Fig. 1 shows a photograph of the base body obtained.

### (2) Production of Molded Article

Using the base body obtained in (1) and a decorative film, a molded article in which the surface of the base body is decorated with the decorative film was obtained by vacuum forming as described above. The pressure in the space (4) in this process was 1.0 × 10⁻³ KPa. The process was carried out such that the printed layer was arranged outside the molded article. The obtained molded article was conditioned under an environment at a temperature of 23°C and a relative humidity of 50% for not less than 24 hours.

### (3) Evaluation of Vacuum Formability

The molded article obtained in (2) was visually observed, and evaluation was carried out based on the following evaluation criteria.
○: No poor external appearance due to a crack(s), breakage, swelling, irregularity, or the like is found.
Δ: Poor external appearance due to a minor crack(s), breakage, and/or the like is found in a portion(s) with a small radius of curvature.
×: Poor external appearance due to a crack(s), breakage, swelling, and/or irregularity is found.

### Materials Used

### (a) Polyester-based Copolymer:

(a-1) to (a-8) Polyester-based copolymers having the properties shown in Table 1 or 2.

### (a') Comparative Polyester-based Copolymer:

(a'-1) to (a'-6) Polyester-based copolymers having the properties shown in Table 2 or 3.

In the tables, TPA means the amount of constituent units derived from terephthalic acid; CHA means the amount of constituent units derived from 1,4-cyclohexanedicarboxylic acid; DEG means the amount of constituent units derived from diethylene glycol; EG means the amount of constituent units derived from ethylene glycol; CHDM means the amount of constituent units derived from 1,4-cyclohexanedimethanol; *trans* means the ratio of *trans* isomers in the constituent units derived from 1,4-cyclohexanedimethanol; and *cis* means the ratio of *cis* isomers in the constituent units derived from 1,4-cyclohexanedimethanol.

### (b) Colored Ink:

### (b-1)

A red ink containing as a vehicle a mixture of 80% by mass vinyl chloride-vinyl acetate copolymer (content of constituent units derived from vinyl acetate, 15% by mass) and 20% by mass poly(methyl methacrylate) resin (content of constituent units derived from methyl methacrylate, 100% by mass). The ink contains 52 parts by mass of a red pigment with respect to 100 parts by mass of the vehicle. The solvent is a mixed solvent of methyl ethyl ketone: 1-methoxy-2-propanol = 20:80 (mass ratio).

### (b-2)

An indigo-blue ink containing as a vehicle a mixture of 80% by mass vinyl chloride-vinyl acetate copolymer (content of constituent units derived from vinyl acetate, 15% by mass) and 20% by mass poly(methyl methacrylate) resin (content of constituent units derived from methyl methacrylate, 100% by mass). The ink contains 47 parts by mass of an indigo-blue pigment with respect to 100 parts by mass of the vehicle. The solvent is a mixed solvent of methyl ethyl ketone : 1-methoxy-2-propanol = 20:80 (mass ratio).

### (b-3)

A red ink containing as a vehicle a mixture of 55% by mass vinyl chloride-vinyl acetate copolymer (content of constituent units derived from vinyl acetate, 15% by mass) and 45% by mass poly(methyl methacrylate) resin (content of constituent units derived from methyl methacrylate, 100% by mass). The ink contains 52 parts by mass of a red pigment with respect to 100 parts by mass of the vehicle. The solvent is a mixed solvent of methyl ethyl ketone : 1-methoxy-2-propanol = 20:80 (mass ratio).

### (b-4)

An indigo-blue ink containing as a vehicle a mixture of 55% by mass vinyl chloride-vinyl acetate copolymer (content of constituent units derived from vinyl acetate, 15% by mass) and 45% by mass poly(methyl methacrylate) resin (content of constituent units derived from methyl methacrylate, 100% by mass). The ink contains 47 parts by mass of an indigo-blue pigment with respect to 100 parts by mass of the vehicle. The solvent is a mixed solvent of methyl ethyl ketone : 1-methoxy-2-propanol = 20:80 (mass ratio).

### (b') Comparative Colored Ink:

### (b'-1)

A red ink containing an acryl-based resin as a vehicle. The ink contains 52 parts by mass of a red pigment with respect to 100 parts by mass of the vehicle. The solvent is a mixed solvent of methyl ethyl ketone : 1-methoxy-2-propanol = 20:80 (mass ratio).

### (b'-2)

An indigo-blue ink containing an acryl-based resin as a vehicle. The ink contains 47 parts by mass of an indigo-blue pigment with respect to 100 parts by mass of the vehicle. The solvent is a mixed solvent of methyl ethyl ketone : 1-methoxy-2-propanol = 20:80 (mass ratio).

### Example 1

A resin film having a thickness of 200 µm was formed with a resin composition of 100 parts by mass of the (a-1) and 12 parts by mass of titanium oxide (white pigment) manufactured by Ishihara Sangyo Kaisha, Ltd. "Tipaque CR-60-2 (trade name)" using a film forming apparatus having an extruder and a T-die, at a die outlet resin temperature of 230°C. Subsequently, a printed layer having a thickness of 3 µm was formed on one side of the resin film obtained as described above, using the (b-1) and the (b-2) by the direct gravure printing method. The above tests (I) to (IV) were carried out. The results are shown in Table 1.

### Examples 2 to 8, Comparative Examples 1 to 6

The process was carried out in entirely the same manner as in Example 1 except that, as the polyester-based copolymer, one of those shown in Tables 1 to 3 was used instead of the (a-1). Each result is shown in one of Tables 1 to 3.

### Comparative Example 7

The process was carried out in entirely the same manner as in Example 1 except that the (b'-1) and the (b'-2) were used instead of the (b-1) and the (b-2). The results are shown in Table 3.

**[Table 1]**

| | | Example 1 | Example 2 | Example 3 | Example 4 | Example 5 |
|---|---|---|---|---|---|---|
| Properties of copolymer | Copolymer | (a-1) | (a-2) | (a-3) | (a-4) | (a-5) |
| | TPA mol% | 100 | 100 | 100 | 100 | 100 |
| | CHA mol% | | | | | |
| | EG mol% | 66.2 | 63.0 | 66.0 | 65.0 | 67.5 |
| | CHDM mol% | 31.0 | 31.0 | 31.0 | 31.0 | 31.0 |
| | DEG mol% | 2.8 | 6.0 | 2.0 | 4.0 | 1.5 |
| | *trans* mol% | 70 | 70 | 70 | 70 | 70 |
| | *cis* mol% | 30 | 30 | 30 | 30 | 30 |
| | Mw/Mn | 3.4 | 3.5 | 3.3 | 3.6 | 3.5 |
| | Mn | 21000 | 21000 | 21000 | 21500 | 20500 |
| Colored ink | | (b-1) | (b-1) | (b-1) | (b-1) | (b-1) |
| | | (b-2) | (b-2) | (b-2) | (b-2) | (b-2) |
| Evaluation | Grid test | Class 0 | Class 1 | Class 0 | Class 0 | Class 1 |
| | Vacuum formability | ○ | Δ | ○ | ○ | Δ |

**[Table 2]**

| | | Example 6 | Example 7 | Example 8 | Example 9 | Comparative Example 1 | Comparative Example 2 |
|---|---|---|---|---|---|---|---|
| Properties of copolymer | Copolymer | (a-6) | (a-7) | (a-8) | (a-1) | (a'-1) | (a'-2) |
| | TPA mol% | 100 | 100 | 100 | 100 | 100 | 100 |
| | CHA mol% | | | | | | |
| | EG mol% | 66.2 | 66.2 | 66.2 | 66.2 | 66.2 | 66.2 |
| | CHDM mol% | 31.0 | 31.0 | 31.0 | 31.0 | 31.0 | 31.0 |
| | DEG mol% | 2.8 | 2.8 | 2.8 | 2.8 | 2.8 | 2.8 |
| | *trans* mol% | 60 | 60 | 60 | 70 | 70 | 70 |
| | *cis* mol% | 40 | 40 | 40 | 30 | 30 | 30 |
| | Mw/Mn | 3.5 | 3.2 | 3.7 | 3.4 | 2.8 | 3.9 |
| | Mn | 20500 | 20500 | 20500 | 21000 | 20500 | 21500 |
| Colored ink | | (b-1) | (b-1) | (b-1) | (b-3) | (b-1) | (b-1) |
| | | (b-2) | (b-2) | (b-2) | (b-4) | (b-2) | (b-2) |
| Evaluation | Grid test | Class 1 | Class 1 | Class 1 | Class 1 | Class 3 | Class 3 |
| | Vacuum formability | Δ | Δ | Δ | Δ | × | × |

**[Table 3]**

| | | Comparative Example 3 | Comparative Example 4 | Comparative Example 5 | Comparative Example 6 | Comparative Example 7 |
|---|---|---|---|---|---|---|
| Properties of copolymer | Copolymer | (a'-3) | (a'-4) | (a'-5) | (a'-6) | (a-1) |
| | TPA mol% | 100 | 100 | 100 | 97 | 100 |
| | CHA mol% | | | | 3 | |
| | EG mol% | 67.8 | 66.2 | 66.2 | 62.8 | 66.2 |
| | CHDM mol% | 31.0 | 31.0 | 31.0 | 31.0 | 31.0 |
| | DEG mol% | 1.2 | 2.8 | 2.8 | 6.2 | 2.8 |
| | *trans* mol% | 60 | 50 | 90 | 70 | 70 |
| | *cis* mol% | 40 | 50 | 10 | 30 | 30 |
| | Mw/Mn | 3.3 | 3.3 | 3.3 | 3.3 | 3.4 |
| | Mn | 20500 | 21000 | 21000 | 21000 | 21000 |
| Colored ink | | (b-1) | (b-1) | (b-1) | (b-1) | (b'-1) |
| | | (b-2) | (b-2) | (b-2) | (b-2) | (b'-2) |
| Evaluation | Grid test | Class 2 | Class 2 | Class 2 | Class 2 | Class 3 |
| | Vacuum formability | × | × | × | × | × |

The laminate of the present invention has favorable adhesiveness (grid test) between (A) the resin film and (B) the printed layer, and the vacuum-formed article has a favorable external appearance. In contrast, in the Comparative Examples, adhesiveness between the resin film and the printed layer was insufficient, and the external appearance of the vacuum-formed article was not satisfactory.

### [DESCRIPTION OF SYMBOLS]

1: Decorative film
2: Heater
3: Base body
4: Space between decorative film and base body
5: Molded Article

## Claims

1. A laminate comprising (A) a resin film and (B) a printed layer formed on at least one side of the resin film, wherein
(A) the resin film comprises (a) a polyester-based copolymer having the properties (1) to (5):
(1) 98 to 100 mol% of constituent units derived from terephthalic acid component are contained based on 100 mol % of the total of constituent units derived from dicarboxylic acid components;
(2) 60.5 to 72.5 mol% of constituent units derived from ethylene glycol, 1.5 to 6 mol% of constituent units derived from diethylene glycol and 26 to 38 mol% of constituent units derived from 1,4-cyclohexanedimethanol are contained based on 100 mol% of the total of constituent units derived from diol components;
(3) the constituent units derived from 1,4-cyclohexanedimethanol are composed of 65 to 75 mol% of *trans* isomers and 35 to 25 mol% of *cis* isomers, wherein the total of the *trans* isomers and the *cis* isomers is 100 mol%; wherein the ratio between the *trans* isomers and the *cis* isomers is calculated using ¹³C-NMR or ¹H-NMR as disclosed in the description;
(4) the ratio (Mw/Mn) between the mass average molecular weight (Mw) and the number average molecular weight (Mn) in terms of polystyrene as calculated from a differential molecular weight distribution curve measured by gel permeation chromatography is 2.9 to 3.8, measured according to the description; and
(5) the number average molecular weight (Mn) is 16,000 to 24,000, measured according to the description; and
(B) the printed layer is composed of a colored ink comprising a vinyl chloride-vinyl acetate copolymer.

2. The laminate according to claim 1, wherein (a) the polyester-based copolymer contains 60.5 to 71.5 mol% of constituent units derived from ethylene glycol, 2 to 5 mol% of constituent units derived from diethylene glycol and 26 to 37 mol% of constituent units derived from 1,4-cyclohexanedimethanol based on 100 mol% of the total of constituent units derived from diol components.

3. The laminate according to claim1 or 2, wherein the colored ink contains a vehicle comprising:
(P) 60 to 95% by mass of vinyl chloride-vinyl acetate copolymer; and
(Q) 40 to 5% by mass of poly(methyl methacrylate)-based resin;
wherein the total of the component (P) and the component (Q) is 100% by mass.

4. The laminate according to any one of claims 1 to 3, wherein (A) the resin film comprises (a) the polyester-based copolymer and a core-shell rubber.

5. The laminate according to any one of claims 1 to 4, comprising:
(A1) a transparent resin film layer comprising (a) the polyester-based copolymer;
(B) a printed layer composed of a colored ink comprising a vinyl chloride-vinyl acetate copolymer; and
(A2) a colored resin film layer comprising (a) the polyester-based copolymer;
in this order.

6. A decorative film comprising the laminate according to any one of claims 1 to 5.

7. An article comprising the decorative film according to claim 6.

8. Use for a three-dimensional forming of the laminate according to any one of claims 1 to 5 for a three-dimensional forming for decoration of articles having complicated shapes.

## Patentansprüche

1. Laminat, umfassend (A) ein Harzfilm und (B) eine Druckschicht, gebildet auf mindestens einer Seite des Harzfilms, wobei
(A) der Harzfilm (a) ein Copolymer auf Polyester-Basis mit den Eigenschaften (1) bis (5) umfaßt:
(1) 98 bis 100 Mol-% an konstituierenden Einheiten, abgeleitet von Terephthalsäurekomponenten, sind enthalten, basierend auf 100 Mol-% der Gesamtheit an konstituierenden Einheiten, abgeleitet von Dicarbonsäurekomponenten;
(2) 60,5 bis 72,5 Mol-% an konstituierenden Einheiten, abgeleitet von Ethylenglycol, 1,5 bis 6 Mol-% an konstituierenden Einheiten, abgeleitet von Diethylenglycol, und 26 bis 38 Mol-% an konstituierenden Einheiten, abgeleitet von 1,4-Cyclohexandimethanol, sind enthalten, basierend auf 100 Mol-% der Gesamtheit an konstituierenden Einheiten, abgeleitet von Diolkomponenten,
(3) die konstituierenden Einheiten, abgeleitet von 1,4-Cyclohexandimethanol sind aus 65 bis 75 Mol-% trans-Isomeren und 35 bis 25 Mol-% cis-Isomeren aufgebaut, wobei die Gesamtheit der trans-Isomeren und der cis-Isomeren 100 Mol-% beträgt, wobei das Verhältnis zwischen den trans-Isomeren und den cis-Isomeren unter Verwendung von ¹³C-NMR oder ¹H-NMR berechnet wird, wie in der Beschreibung offenbart,
(4) das Verhältnis (Mw/Mn) zwischen dem gewichtsmittleren Molekulargewicht (Mw) und dem zahlenmittleren Molekulargewicht (Mn) bezogen auf Polystyrol, berechnet aus einer Differentialmolekulargewichtsverteilungskurve, gemessen durch Gelpermeationschromatographie, 2,9 bis 3,8 beträgt, gemessen gemäß der Beschreibung, und
(5) das zahlenmittlere Molekulargewicht (Mn) 16 000 bis 24 000 beträgt, gemessen gemäß der Beschreibung, und
(B) die Druckschicht aus einer Farbtinte, umfassend ein Vinylchlorid-Vinylacetat-Copolymer aufgebaut ist.

2. Laminat gemäß Anspruch 1, wobei (a) das Copolymer auf Polyester-Basis 60,5 bis 71,5 Mol-% an konstituierenden Einheiten abgeleitet von Ethylenglycol, 2 bis 5 Mol-% an konstituierenden Einheiten abgeleitet von Diethylenglycol und 26 bis 37 Mol-% an konstituierenden Einheiten, abgeleitet von 1,4-Cyclohexandimethanol, bezogen auf 100 Mol-% der Gesamtheit an konstituierenden Einheiten, abgeleitet von Diolkomponenten, enthält.

3. Laminat gemäß Anspruch 1 oder 2, wobei die Farbtinte einen Träger enthält, umfassend:
(P) 60 bis 95 Masse-% Vinylchlorid-Vinylacetat-Copolymer; und
(Q) 40 bis 5 Masse-% Harz auf Poly(methylmethacrylat)-Basis,
wobei die Gesamtheit der Komponente (P) und der Komponente (Q) 100 Masse-% beträgt.

4. Laminat gemäß einem der Ansprüche 1 bis 3, wobei (A) der Harzfilm (a) das Copolymer auf Polyester-Basis und einen Kern-Schaie-Kautschuk umfaßt.

5. Laminat gemäß einem der Ansprüche 1 bis 4, umfassend:
(A1) eine transparente Harzfilmschicht, umfassend (a) das Copolymer auf Polyester-Basis;
(B) eine Druckschicht, aufgebaut aus einer Farbtinte, umfassend ein Vinylchlorid-Vinylacetat-Copolymer und
(A2) eine gefärbte Harzfilmschicht, umfassend (a) das Copolymer auf Polyester-Basis,
in dieser Reihenfolge.

6. Dekorativer Film, umfassend das Laminat gemäß einem der Ansprüche 1 bis 5.

7. Gegenstand, umfassend den dekorativen Film gemäß Anspruch 6.

8. Verwendung einer dreidimensionalen Formung des Laminats gemäß einem der Ansprüche 1 bis 5 für eine dreidimensionale Formung für Dekoration von Gegenständen mit komplizierten Formen.

## Revendications

1. Stratifié comprenant (A) un film de résine et (B une couche imprimée formée sur au moins un côté du film de résine, dans lequel
(A) le film de résine comprend (a) un copolymère à base de polyester ayant les propriétés (1) à (5) :
(1) 98 à 100 % en moles de motifs constitutifs dérivés d'un composant acide téréphtalique sont contenus sur la base de 100 % en moles du total des motifs constitutifs dérivés de composants acides dicarboxyliques ;
(2) 60,5 à 72,5 % en moles de motifs constitutifs dérivés d'éthylèneglycol, 1,5 à 6 % en moles de motifs constitutifs dérivés de diéthylèneglycol et 26 à 38 % en moles de motifs constitutifs dérivés de 1,4-cyclohexanediméthanol sont contenus sur la base de 100 % en moles du total des motifs constitutifs dérivés de composants diols ;
(3) les motifs constitutifs dérivés de 1,4-cyclohexanediméthanol sont composés de 65 à 75 % en moles d'isomères *trans* et de 35 à 25 % en moles d'isomères *cis* ; le total des isomères *trans* et des isomères *cis* étant de 100 % en moles ; et le rapport entre les isomères *trans* et les isomères *cis* étant calculé par utilisation d'une RMN-¹³C ou d'une RMN-¹H comme divulgué dans la description ;
(4) le rapport (Mw/Mn) entre la masse moléculaire moyenne en masse (Mw) et la masse moléculaire moyenne en nombre (Mn) en termes de polystyrène, tel que calculé à partir d'une courbe de distribution des masses moléculaires différentielle mesurée par chromatographie par perméation de gel est de 2,9 à 3,8, mesuré conformément à la description ; et
(5) la masse moléculaire moyenne en nombre (Mn) est de 16 000 à 24 000, mesurée conformément à la description, et
(B) la couche imprimée est composée d'une encre colorée comprenant un copolymère de chlorure de vinyle et d'acétate de vinyle.

2. Stratifié selon la revendication 1, dans lequel (a) le copolymère à base de polyester contient 60,5 à 71,5 % en moles de motifs constitutifs dérivés d'éthylèneglycol, 2 à 5 % en moles de motifs constitutifs dérivés de diéthylèneglycol et 26 à 37 % en moles de motifs constitutifs dérivés de 1,4-cyclohexanediméthanol sur la base de 100 % en moles du total des motifs constitutifs dérivés de composants diols.

3. Stratifié selon la revendication 1 ou 2, dans lequel l'encre colorée contient un véhicule comprenant :
(P) 60 à 95 % en masse d'un copolymère de chlorure de vinyle et d'acétate de vinyle ; et
(Q) 40 à 5 % en masse d'une résine à base de poly(méthacrylate de méthyle) ;
dans lequel le total du composant (P) et du composant (Q) est de 100 % en masse.

4. Stratifié selon l'une quelconque des revendications 1 à 3, dans lequel (A) le film de résine comprend (a) le copolymère à base de polyester et un caoutchouc à noyau-enveloppe.

5. Stratifié selon l'une quelconque des revendications 1 à 4, comprenant :
(A1) une couche de film de résine transparente comprenant (a) le copolymère à base de polyester (;
(B) une couche imprimée composée d'une encre colorée comprenant un copolymère de chlorure de vinyle et d'acétate de vinyle ; et
(A2) une couche de film de résine colorée comprenant (a) le copolymère à base de polyester;
dans cet ordre.

6. Film décoratif comprenant le stratifié selon l'une quelconque des revendications 1 à 5.

7. Article comprenant le film décoratif selon la revendication 6.

8. Utilisation d'un façonnage tridimensionnel du stratifié selon l'une quelconque des revendications 1 à 5 pour un façonnage tridimensionnel aux fins de la décoration d'articles ayant des formes compliquées.
